(19) Europäisches Patentamt
European Patent Office
Office européen des brevets

(11) **EP 3 907 660 A1**

(12) **EUROPEAN PATENT APPLICATION**

(43) Date of publication:
**10.11.2021 Bulletin 2021/45**

(51) Int Cl.:
**G06K 9/62** (2006.01)

(21) Application number: **21169665.3**

(22) Date of filing: **21.04.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.06.2020 CN 202010536808**

(71) Applicant: **BEIJING BAIDU NETCOM SCIENCE AND TECHNOLOGY CO. LTD.**
**100085 Beijing (CN)**

(72) Inventors:
• **NI, Zihan**
  **Beijing, 100085 (CN)**
• **SUN, Yipeng**
  **Beijing, 100085 (CN)**
• **HAN, Junyu**
  **Beijing, 100085 (CN)**

(74) Representative: **Maiwald Patent- und Rechtsanwaltsgesellschaft mbH Elisenhof**
**Elisenstraße 3**
**80335 München (DE)**

(54) **METHOD, APPARATUS, ELECTRONIC DEVICE, AND STORAGE MEDIUM FOR RECOGNIZING LICENSE PLATE**

(57) The disclosure provides a method for recognizing a license plate. The implementation includes: obtaining a feature map including a plurality of feature vectors of a license plate region; sequentially inputting the plurality of feature vectors based on a first order into a first recurrent neural network for encoding to obtain a first code of each of the plurality of feature vectors; sequentially inputting the plurality of feature vectors based on a second order into a second recurrent neural network for encoding to obtain a second code of each of the plurality of feature vectors; generating a plurality of target codes of the plurality of feature vectors based on the first code of each of the plurality of feature vectors and the second code of each of the plurality of feature vectors; and decoding the plurality of target codes to obtain a plurality of characters in the license plate.

EP 3 907 660 A1

## Description

### FIELD

The disclosure relates to the field of artificial intelligence, computer vision, and deep learning technologies, particularly to the field of image recognition technologies, and more particularly to a method and an apparatus for recognizing a license plate.

### BACKGROUND

License plate recognition is one of important technologies of urban vehicle management. Accurate and rapid recognition on license plates in various complex scenes may improve efficiency of traffic law enforcement, parking lot management and road traffic.

Presently, license plate recognition technologies have been basically mature in scenes such as a pass scene and a road monitoring scene, but the recognition accuracy in complex scenes such as a double-row license plate scene and a Chinese character scene is not ideal.

### SUMMARY

The disclosure provides a method and an apparatus for recognizing a license plate, an electronic device, a storage medium, and a program product.

A first aspect of embodiments of the disclosure provides a method for recognizing a license plate. The method includes: obtaining a feature map of a license plate region, the feature map including a plurality of feature vectors; sequentially inputting the plurality of feature vectors based on a first order into a first recurrent neural network for encoding to obtain a first code of each of the plurality of feature vectors; sequentially inputting the plurality of feature vectors based on a second order into a second recurrent neural network for encoding to obtain a second code of each of the plurality of feature vectors; generating a plurality of target codes of the plurality of feature vectors based on the first code of each of the plurality of feature vectors and the second code of each of the plurality of feature vectors; and decoding the plurality of target codes to obtain a plurality of characters in the license plate.

A second aspect of embodiments of the disclosure provides an apparatus for recognizing a license plate. The apparatus includes: an obtaining module, a first encoding module, a second encoding module, a generating module, and a decoding module. The obtaining module is configured to obtain a feature map of a license plate region, the feature map including a plurality of feature vectors. The first encoding module is configured to sequentially input the plurality of feature vectors based on a first order into a first recurrent neural network for encoding to obtain a first code of each of the plurality of feature vectors. The second encoding module is configured to sequentially input the plurality of feature vectors based on a second order into a second recurrent neural network for encoding to obtain a second code of each of the plurality of feature vectors. The generating module is configured to generate a plurality of target codes of the plurality of feature vectors based on the first code of each of the plurality of feature vectors and the second code of each of the plurality of feature vectors. The decoding module is configured to decode the plurality of target codes to obtain a plurality of characters in the license plate.

A third aspect of embodiments of the disclosure provides an electronic device. The electronic device includes: at least one processor and a memory. The memory is communicatively coupled to the at least one processor. The memory has instructions executable by the at least one processor stored thereon that, when executed by the at least one processor, cause the at least one processor to implement the method for recognizing the license plate according to the first aspect of embodiments.

A fourth aspect of embodiments of the disclosure also provides a non-transitory computer readable storage medium having computer instructions stored thereon. The computer instructions are configured to cause a computer to execute the method for recognizing the license plate according to the first aspect of embodiments.

A fifth aspect of embodiments of the disclosure also provides a program product having stored therein instructions that, when executed by one or more processors of an apparatus, causes the apparatus to perform the method for recognizing the license plate according to the first aspect of embodiments.

The preferred embodiments are defined in the dependent claims.

It should be understood that, the contents described in the Summary are not intended to identify key or important features of embodiments of the disclosure, nor is it intended to limit the scope of the disclosure. Other features of the disclosure will become apparent from the following description.

**BRIEF DESCRIPTION OF THE DRAWINGS**

The accompanying drawings are used for better understanding the solution and do not constitute a limitation of the disclosure.

FIG. 1 is a flow chart illustrating a method for recognizing a license plate according to Embodiment one of the disclosure.
FIG. 2 is a flow chart illustrating a method for recognizing a license plate according to Embodiment two of the disclosure.
FIG. 3 is a flow chart illustrating a decoding sub-process according to embodiments of the disclosure.
FIG. 4 is a flow chart illustrating a sub-process for obtaining a feature map according to Embodiment three of the disclosure.
FIG. 5 is a flow chart illustrating a method for training a license plate recognition model according to Embodiment four of the disclosure.
FIG. 6 is a flow chart illustrating a sub-process for obtaining a sample image according to Embodiment five of the disclosure.
FIG. 7 is a block diagram illustrating an apparatus for recognizing a license plate according to Embodiment six of the disclosure.
FIG. 8 is a block diagram illustrating an apparatus for training a license plate recognition model according to Embodiment seven of the disclosure.
FIG. 9 is a block diagram illustrating an electronic device according to embodiments of the disclosure.

DETAILED DESCRIPTION

Description will be made below to exemplary embodiments of the disclosure with reference to accompanying drawings, which includes various details of embodiments of the disclosure to facilitate understanding and should be regarded as merely examples. Therefore, it should be recognized by the skilled in the art that various changes and modifications may be made to the embodiments described herein without departing from the scope and spirit of the disclosure. Meanwhile, for clarity and conciseness, descriptions for well-known functions and structures are omitted in the following description.

A conventional system for recognizing a license plate generally positions the license plate by using manners such as edge detection and contour extraction, corrects the location of the license plate based on four corners of the license plate, performs single word detection by using manners such as MSER (Maximally Stable Extremal Regions), classifies regions of respective single words by utilizing a classifier such as SVM (support vector machines), and finally integrates recognition results of all single words to obtain a license plate number.

An existing license plate end-to-end system employs a connectionist temporal classification (CTC) model based on a neural network for license plate recognition, but may merely process a single-row license plate. Therefore, a line segmentation way is generally employed for multi-row license plate recognition. Since context information is not utilized when recognizing a double-row license plate, and a feature expression ability is limited, a recognition effect for the license plate is not ideal.

For the technical problem existing the license plate recognition technology in the related art, the disclosure provides a method for recognizing a license plate. A feature map of a license plate region is obtained. The feature map includes multiple feature vectors. The multiple feature vectors are sequentially based on a first order inputted into a first recurrent neural network for encoding to obtain a first code of each of the multiple feature vectors. The multiple feature vectors are sequentially based on a second order inputted into a second recurrent neural network for encoding to obtain a second code of each of the multiple feature vectors. Multiple target codes of the multiple feature vectors are generated based on the first codes of the multiple feature vectors and the second codes of the multiple feature vectors. The multiple target codes are decoded to obtain multiple characters in the license plate. Features of the extracted license plate region may be encoded forward and backward by respectively utilizing the two recurrent neural networks, such that the encoded features may carry context information, and the feature expression ability is enhanced, thereby more accurately recognizing various types of license plates and optimizing the recognition effect for the license plates.

Description will be made below to a method and an apparatus for recognizing a license plate, a method and an apparatus for training a license plate recognition model, an electronic device, and a storage medium according to embodiments of the disclosure with reference to accompanying drawings.

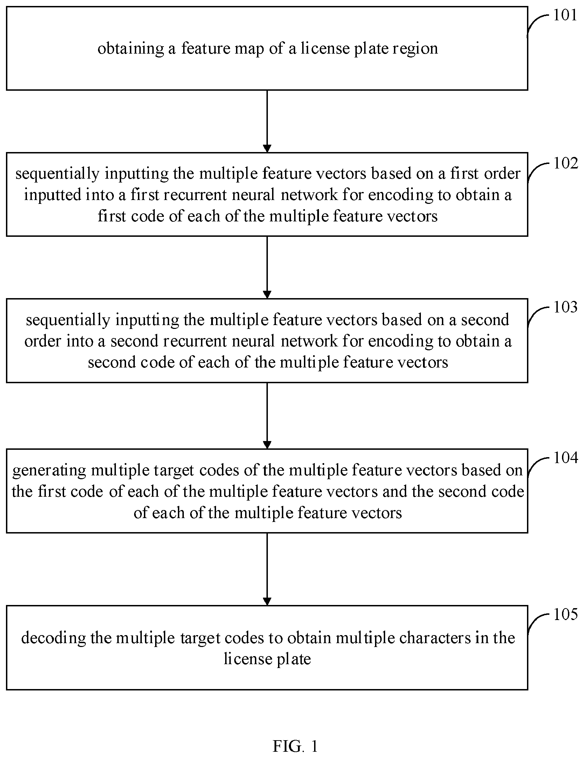

FIG. 1 is a flow chart illustrating a method for recognizing a license plate according to Embodiment one of the disclosure.

Embodiments of the disclosure take that the method for recognizing the license plate is configured to an apparatus for recognizing a license plate as an example for illustration. The apparatus for recognizing the license plate may be applicable to any electronic device, to enable the electronic device to perform a recognition function on the license plate.

The electronic device may be a personal computer (PC), a cloud device and a mobile device. The mobile device may be a hardware device having various operating systems, such as a mobile phone, a tablet, a personal digital assistant, a wearable device, or a vehicle-mounted device.

As illustrated in FIG. 1, the method for recognizing the license plate may include the following.

At block 101, a feature map of a license plate region is obtained.

The feature map includes multiple feature vectors.

The feature map of the license plate region may include a color feature, a texture feature, a shape feature, a spatial relationship feature and the like.

In embodiments of the disclosure, after a license plate image containing the license plate region is obtained by a capturing device capturing the license plate, the feature map of the license plate image may be extracted through a convolution neural network model to determine the feature map of the license plate region from the feature map of the license plate image.

It should be noted that, when the license plate image is obtained, a common capturing device may be employed to capture the license plate to obtain a two-dimensional image containing the license plate region. A depth camera may also be employed to capture the license plate to obtain a three-dimensional image containing the license plate region, which is not limited here.

For example, a convolutional neural network includes a convolutional layer and a pooling layer. The convolutional layer may be employed to perform feature extraction on the license plate image to obtain the feature map of the license plate image, and to determine the feature map of the license plate region from the feature map of the license plate image.

In order to control a speed of license plate recognition, the license plate image inputted into the convolutional neural network may be scaled to a certain size, such as 512*512. However, a small-sized license plate is smaller in the license plate image, thereby causing a poor recognition effect for the small-sized license plate. In a possible condition, when the feature extraction is performed on the license plate image, a range of the feature extraction may be appropriately expanded to obtain the feature map of the license plate region.

For example, after a circumscribed rectangle of a region of the small-sized license plate is obtained, the circumscribed rectangle may be expanded by 0.5 times of width or height of the circumscribed rectangle. A feature map of the region of the small-sized license plate may be obtained by expanding the range of the feature extraction of the region of the small-sized license plate.

A national standard size of a double-row license plate is 220*440. In order to balance a time-consuming of branch recognition and ensure sufficient features, a size 8*16 may be selected as the size of the feature map of the license plate region in the disclosure.

At block 102, the multiple feature vectors are sequentially based on a first order inputted into a first recurrent neural network for encoding to obtain a first code of each of the multiple feature vectors.

At block 103, the multiple feature vectors are sequentially based on a second order inputted into a second recurrent neural network for encoding to obtain a second code of each of the multiple feature vectors.

A recurrent neural network (RNN) is a kind of recurrent neural network which takes sequence data as input, performs recursion in an evolution direction of the sequence data, and connects all nodes by chain.

For convenience of distinction, in the disclosure, the recurrent neural network for encoding the multiple feature vectors in turn based on the first order is named as the first recurrent neural network, and the recurrent neural network for encoding the multiple feature vectors in turn based on the second order is named as the second recurrent neural network. Of course, the two recurrent neural networks also be named in other ways, which is only used as an exemplary expression in the disclosure.

Similarly, for convenience of distinction, in the disclosure, the encoded feature vector obtained by inputting each feature vector into the first recurrent neural network for encoding is named as the first code. The encoded feature vector obtained by inputting each feature vector into the second recurrent neural network for encoding is named as the second code. Of course, the feature vector may also be named in other ways, which is only used as an exemplary expression in the disclosure.

In the disclosure, after the multiple feature vectors contained in the feature map of the license plate region are obtained, the multiple feature vectors may be sequentially inputted into the first recurrent neural network based on the first order for encoding, to obtain the first code of each feature vector based on an encoding result of the first recurrent neural network. Furthermore, the multiple feature vectors may be sequentially inputted into the second recurrent neural network based on the second order for encoding, to obtain the second code of each feature vector.

It should be noted that, the first order may be a forward order from left to right or a reverse order from right to left. In other words, the multiple feature vectors may be inputted into the first recurrent neural network from left to right for encoding, or may be inputted into the first recurrent neural network from right to left for encoding, which is not limited in the disclosure.

Similarly, the second order may be a forward sequence from left to right or a reverse sequence from right to left, which is not limited in the disclosure. In the disclosure, the first order needs to be opposite to the second order. For example, when the first order is the forward order from left to right, the second order is the reverse order from right to left. In other words, when the first recurrent neural network encodes the multiple feature vectors forward, the second recurrent neural network encodes the multiple feature vectors backward.

It should be noted that, the above actions at blocks 102 and 103 may be not limited to the above sequential execution process. The action at block 103 may be executed first, and then the action at block 102 is executed; or the action at blocks 102 and 103 may be executed simultaneously. It may be seen that, an execution order of the actions at blocks 102 and 103 is not limited in the disclosure.

At block 104, multiple target codes of the multiple feature vectors are generated based on the first code of each of the multiple feature vectors and the second code of each of the multiple feature vectors.

The target code may be an encoding result obtained by encoding each feature vector.

As a possible implementation, after the first code and the second code of each feature vector are obtained, the first code and the second code of each feature vector may be combined by a connection relationship between the first code and the second code corresponding to each feature vector to generate the target code of each feature vector.

It may be understood that, the license plate image and the characters in the license plate image correspond to a sequential sequence, and information in two directions is useful information. In the disclosure, the multiple feature vectors contained in the feature map of the license plate region are respectively encoded forward and backward by utilizing the recurrent neural network, such that the target code corresponding to each feature carries context information, and thus more useful information may be extracted.

At block 105, the multiple target codes are decoded to obtain multiple characters in the license plate.

Multiple characters in the license plate may be any combination of Chinese characters, numbers and letters. Furthermore, the multiple characters may be arranged in one row or in two rows, which is not limited here.

In this embodiment, after the multiple target codes of the multiple feature vectors are obtained, the multiple target codes may be decoded to determine the multiple characters in the license plate based on a decoding result.

As a possible implementation, after the multiple feature vectors are encoded to obtain the multiple target codes, the multiple target codes may be inputted into a recurrent neural network for decoding to obtain multiple decoded vectors. Furthermore, the multiple characters in the license plate are determined based on the multiple decoded vectors.

With the method for recognizing the license plate according to embodiments of the disclosure, the feature map of the license plate region is obtained. The feature map includes the multiple feature vectors. The multiple feature vectors are sequentially based on the first order inputted into the first recurrent neural network for encoding to obtain the first code of each of the plurality of feature vectors. The multiple feature vectors are sequentially based on the second order inputted into the second recurrent neural network for encoding to obtain the second code of each of the plurality of feature vectors. The multiple target codes of the multiple feature vectors are generated based on the first code of each of the plurality of feature vectors and the second code of each of the plurality of feature vectors. The multiple target codes are decoded to obtain the multiple characters in the license plate. With the method, the multiple feature vectors contained in the extracted feature map of the license plate region are encoded forward and backward by utilizing the recurrent neural networks, such that the encoded feature vectors may carry the context information, thereby greatly improving the accuracy of recognizing the license plate.

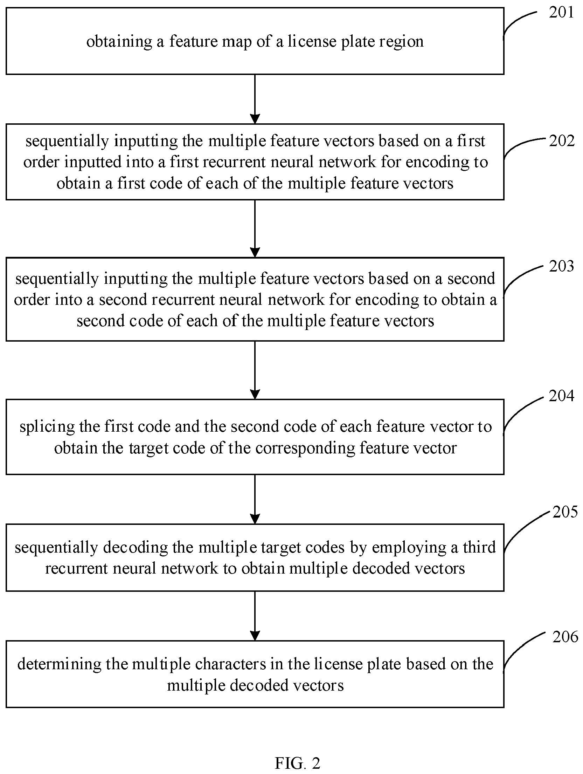

On the basis of the above embodiment, as a possible condition, after the first code and the second code of each feature vector are obtained, the first code and the second code of each feature vector are spliced to obtain the target code of the corresponding feature vector, such that the multiple target codes may be obtained. The multiple target codes are decoded to obtain the multiple characters in the license plate. Detailed description will be made below to the above process with reference to FIG. 2. FIG. 2 is a flow chart illustrating a method for recognizing a license plate according to Embodiment two of the disclosure.

As illustrated in FIG. 2, the method for recognizing the license plate may also include the following.

At block 201, a feature map of a license plate region is obtained.

At block 202, the multiple feature vectors are sequentially based on a first order inputted into a first recurrent neural network for encoding to obtain a first code of each of the multiple feature vectors.

At block 203, the multiple feature vectors are sequentially based on a second order inputted into a second recurrent neural network for encoding to obtain a second code of each of the multiple feature vectors.

In embodiments of the disclosure, the implementation process of the actions at blocks 201 to 203 may be referred to the implementation process of the actions at blocks 101 to 103 in the above embodiments, which is not described in detail herein.

It should be noted that, the actions at blocks 202 and 203 is not limited to the above sequential execution process. The action at block 203 may be executed first, and then the action at block 202 is executed; or the actions at blocks 202 and 203 may be executed simultaneously. It may be seen that, an execution order of the actions at blocks 202 and 203 is not limited in the disclosure.

At block 204, the first code and the second code of each feature vector are spliced to obtain the target code of the corresponding feature vector.

In embodiments of the disclosure, the multiple feature vectors are sequentially inputted into the first recurrent neural network and the second recurrent neural network for encoding, such that the first code and the second code of each feature vector may be obtained. The first code and the second code of each feature vector may be spliced to obtain the corresponding target code after the first code and the second code of each feature vector are obtained. Therefore, semantic information including context may be obtained.

For example, it is assumed that the feature map A of the license plate region contains multiple feature vector, such as the feature vector $A_{i,j}$ for instance, where i and j represent a coordinate of each point in the feature map. The feature vector $A_{i,j}$ may be encoded by respectively employing the first recurrent neural network and the second recurrent neural network to obtain the first code $F_{i,j}$ and the second code $B_{i,j}$, and the first code Fij and the second code Bij are spliced based on positions to obtain the target code of the feature vector. Sizes of both the first code $F_{i,j}$ and the second code Bij are C*H*W, that is, each position is a C-dimensional vector. The splicing base on the positions is to splice the C-dimensional vectors of each position of two feature maps in H*W, and the target code of the feature map is finally obtained as 2C*H*W.

At block 205, the multiple target codes are sequentially decoded by employing a third recurrent neural network to obtain multiple decoded vectors.

In embodiments of the disclosure, the recurrent neural network may also be employed when the multiple target codes are decoded. In order to distinguish the recurrent neural network for decoding from the recurrent neural networks used for encoding, the recurrent neural network employed for decoding the multiple target codes is named as the third recurrent neural network in embodiments.

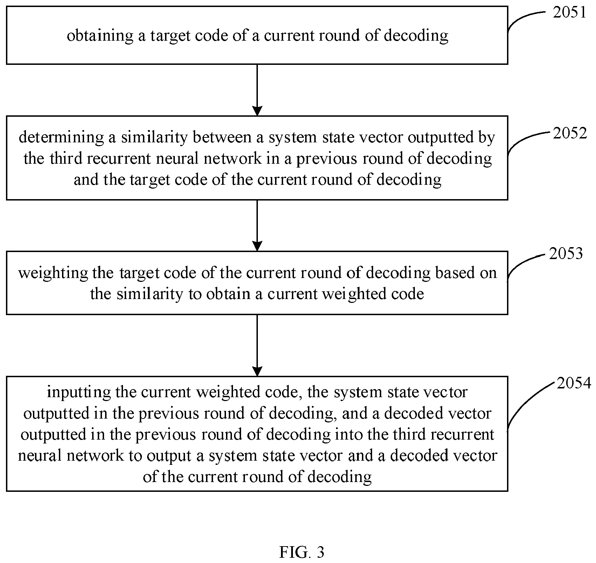

As a possible implementation, when the third recurrent neural network is configured to decode the multiple target codes in sequence, multiple rounds of decoding may be performed. Referring to FIG. 3, each round of decoding may include the following.

At block 2051, a target code of a current round of decoding is obtained.

It may be understood that, when the multiple target codes are decoded by the third recurrent neural network in sequence, each round of decoding has a corresponding target code. Therefore, the target code of each round of decoding needs to be obtained during performing the multiple rounds of decoding by employing the third recurrent neural network.

At block 2052, a similarity between a system state vector outputted by the third recurrent neural network in a previous round of decoding and the target code of the current round of decoding is determined.

The system state vector is a value of a state variable of a system at a certain moment, which is called a state of the system at the moment. For example, the value of the state variable at t=0 is called as an initial state vector or a start state vector of the system.

As a possible implementation, a spatial attention mechanism may be employed to calculate the similarity between the system state vector outputted by the third recurrent neural network in the previous round of decoding and the target code of the current round of decoding.

At block 2053, the target code of the current round of decoding is weighted based on the similarity to obtain a current weighted code.

It may be understood that, in a case that there is a large probability of the similarity between the system state vector outputted by the third recurrent neural network in the previous round of decoding and the target code of the current round of decoding, a higher weight may be employed to obtain the current weighted code when the target code of the current round of decoding is weighted.

At block 2054, the current weighted code, the system state vector outputted in the previous round of decoding, and a decoded vector outputted in the previous round of decoding are inputted into the third recurrent neural network to output a system state vector and a decoded vector of the current round of decoding.

In the disclosure, after the current weighted code is obtained based on the similarity between the system state vector outputted by the third recurrent neural network in the previous round of decoding and the target code of the current round of decoding, the current weighted code, the system state vector decoded in the previous round and the decoded vector decoded in the previous round may be input into the third recurrent neural network to output the system state vector and the decoded vector decoded in the current round.

It should be noted that, when the third recurrent neural network is configured to decode the multiple target codes in the first round of decoding, there is no system state vector and no decoded vector outputted in the previous round of decoding. Therefore, in the disclosure, a start identifier of decoding may be preset, and the start identifier may be determined as the decoded vector outputted in the previous round of decoding. The system state vector outputted in the last encoding of the second recurrent neural network may also be determined as the system state vector outputted in the previous round of decoding.

During decoding the multiple target codes in the first round of decoding by employing the third recurrent neural network, the similarity between the system state vector outputted by the second recurrent neural network in the last round of decoding and the target code in the first round of decoding may be determined. Then, the target code of the current round of decoding is weighted based on the similarity to obtain the current weighted code. Finally, the current weighted code, the system state vector outputted in the last encoding of the second recurrent neural network, and the start identifier are inputted into the third recurrent neural network to output the system state vector and the decoded vector decoded in the first round.

At block 206, the multiple characters in the license plate are determined based on the multiple decoded vectors.

In the disclosure, after the multiple target codes are decoded for the multiple rounds in sequence by employing the third recurrent neural network to obtain the multiple decoded vectors, the multiple decoded vectors may be integrated to determine the multiple characters in the license plate.

With the method for recognizing the license plate according to embodiments of the disclosure, the feature map of the license plate region is obtained. The feature map includes the multiple feature vectors. The multiple feature vectors are encoded forward and backward by employing the recurrent neural network, to obtain the first codes and the second codes of the multiple feature vectors. The first code and the second code of each feature vector are spliced to obtain the target code of the corresponding feature vector, so as to obtain the multiple target codes. The multiple target codes are sequentially decoded by employing the third recurrent neural network to obtain the multiple decoded vectors. The multiple characters in the license plate are determined based on the multiple decoded vectors. The multiple target codes carry the context information, such that the ability of feature expression is enhanced, thereby improving the recognition performance of the single-row license plate and the double- row license plate.

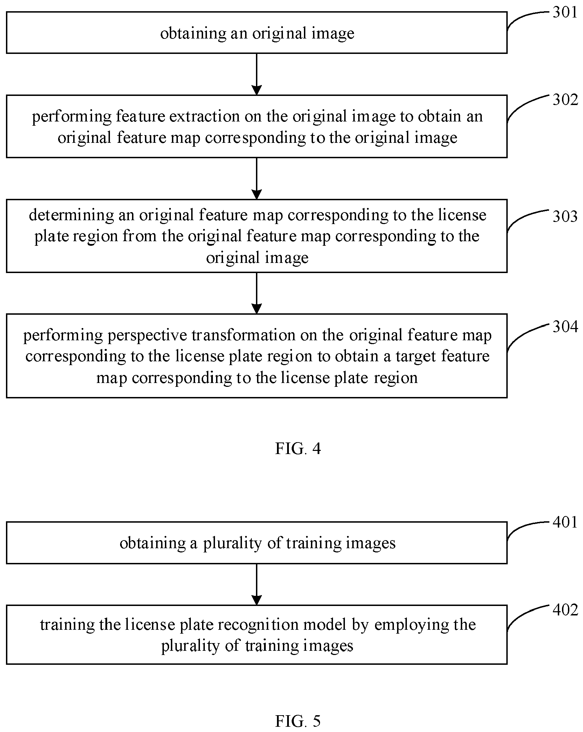

In some scenes, the license plate may have a large angle of inclination, or the size of the license plate may be small. For recognition of the small-size license plate, an existing recognition model for the license plate is configured to extract the feature of the license plate from the shared feature map. Because the small-size license plate accounts for a small proportion in the shared feature map, the recognition effect is poor. For such scene, in any of the above embodiments, feature extraction is performed on a text region and a surrounding set range of an original image, thereby solving a problem that the size of the feature map is small and the license plate region fails to be recognized due to the small size of the license plate. Meanwhile, when the feature map of the license plate region is obtained at blocks 101 or 201, the feature extraction may also be performed on the original image to obtain an original feature map corresponding to the original image; an original feature map corresponding to the license plate region is determined from the original feature map corresponding to the original image; and perspective transformation is further performed on the original feature map corresponding to the license plate region to obtain a target feature map corresponding to the license plate region. Detailed description will be made below to the above process with reference to FIG. 4. FIG. 4 is a flow chart illustrating a sub-process for obtaining a feature map according to Embodiment three of the disclosure.

As illustrated in FIG. 4, the actions at blocks 101-201, may also include the following.

At block 301, an original image is obtained.

The original image is an entire vehicle image including the license plate region.

In the disclosure, when the original image is obtained, a common capturing device may be employed to obtain a two-dimensional original image, or a depth camera may also be employed to obtain a three-dimensional original image, which is not limited here.

For example, a vehicle traveling on a road may be captured by image collection devices arranged at an intersection or both sides of the road to obtain the original image.

At block 302, feature extraction is performed on the original image to obtain an original feature map corresponding to the original image.

The feature extraction is a concept in computer vision and image processing. The feature extraction refers to employing a computer to extract image information and decide whether points of each image belong to an image feature. A result of the feature extraction is that the points on the image are divided into different subsets. Such subsets are often belonging to isolated points, continuous curves, or continuous regions. The image features used commonly may include a color feature, a texture feature, a shape feature and a spatial relationship feature.

The color feature is a global feature, which describes a surface property of an object corresponding to the image or the image region. For example, the color feature of the original image may be extracted by employing a color histogram method.

The texture feature is also a global feature, which also describes a surface property of an object corresponding to the image or the image region. Different from the color feature, the texture feature is not a pixel-based feature, but needs to be statistically calculated in a region containing multiple pixels. For example, a texture feature of an original image of a measured object may be extracted by employing a statistical method.

A geometric parameter method, a shape invariant moment method and the like may be configured to extract the shape feature of the original image.

There are two ways for extracting the image spatial relationship feature. Way one: the original image is automatically segmented, objects or color regions contained in the original image are segmented, the image feature is extracted based on the color regions, and an index is established. Way two: the original image is simply divided into several regular sub-blocks, the feature of each regular sub-block is extracted, and an index is established.

It should be explained that, when the image feature of the original image is extracted, at least one of the color feature, the texture feature, the shape feature and the spatial relationship feature of the original image may be extracted.

As a possible implementation, the text region of the original image is extracted, and the feature extraction is performed on the text region in the original image and the set surrounding range of the text region to obtain the original feature map. Therefore, the feature map corresponding to the license plate region may be accurately obtained.

For example, the license plate in the original image is a small-sized license plate, and the license plate may be expanded outward by 0.5 times in width or height after the text region of the original image is recognized, to extract the feature from the text region of the original image and the set surrounding range of the text region, to obtain the feature map of the small-sized license plate region.

At block 303, an original feature map corresponding to the license plate region is determined from the original feature map corresponding to the original image.

It may be understood that, although the original image contains the license plate region, the original image also contains other regions such as a vehicle and a surrounding environment. In order to accurately recognize the license plate, the original feature map corresponding to the license plate region may be determined from the original feature map corresponding to the original image, and license plate recognition is performed on the original feature map corresponding to the license plate region.

For example, there may be a small proportion of the small-sized license plate in the original feature map corresponding to the original image. When the license plate recognition is directly performed on the original feature map extracted from the original image, there may be a low recognition rate of the small-sized license plate. In order to improve the recognition rate of the small-sized license plate, in the disclosure, the original feature map corresponding to the license plate region may be determined from the original feature map corresponding to the original image, and then the original feature map corresponding to the license plate region is processed, thereby achieving the effect of improving the recognition of the small-sized license plate.

As a possible implementation, after the feature of the original image is extracted to obtain the original feature map corresponding to the original image, the original feature map corresponding to the original image is inputted into a fully convolution network (FCN) for object recognition to determine a candidate box of the license plate in the original feature map corresponding to the original image; and a part of the original feature map corresponding to the original image within the candidate box of the license plate is taken as the original feature map corresponding to the license plate region.

At block 304, perspective transformation is performed on the original feature map corresponding to the license plate region to obtain a target feature map corresponding to the license plate region.

An essence of the perspective transformation is projecting the image to a new viewing plane. A general transformation formula of the perspective transformation is as follows:

$$[x', y', w'] = [u, v, w] \begin{bmatrix} a_{11} & a_{12} & a_{13} \\ a_{21} & a_{22} & a_{23} \\ a_{31} & a_{32} & a_{33} \end{bmatrix},$$

where, $[x', y', w']$ represents a coordinate on the feature map outputted after the perspective transformation, $[u, v, w]$ represents a coordinate on the original feature map, $\begin{bmatrix} a_{11} & a_{12} & a_{13} \\ a_{21} & a_{22} & a_{23} \\ a_{31} & a_{32} & a_{33} \end{bmatrix}$ represents a transformation matrix, $a_{33}$ represents 1, and the remaining eight values are unknown variables.

In the disclosure, after the original feature map corresponding to the license plate region is obtained, the perspective transformation may be performed on the original feature map corresponding to the license plate region to obtain the target feature map corresponding to the license plate region with a fixed width and height.

In embodiments of the disclosure, the original image is obtained, the feature extraction is performed on the original image to obtain the original feature map corresponding to the original image, and the original feature map corresponding to the license plate region is determined from the original feature map corresponding to the original image; and the perspective transformation is performed on the original feature map corresponding to the license plate region to obtain the target feature map corresponding to the license plate region. In this way, the target feature map corresponding to the license plate region may be accurately obtained, and the multiple characters of the license plate may be recognized from the target feature map corresponding to the license plate region, which facilitates to improve the accuracy of license plate recognition.

In order to improve an accuracy of a license plate recognition model, the license plate recognition model may be trained by employing a model training method based on deep learning, such that the trained license plate recognition model may accurately recognize various types of license plates. For this, the disclosure provides a method for training a license plate recognition model.

FIG. 5 is a flow chart illustrating a method for training a license plate recognition model according to Embodiment four of the disclosure.

As illustrated in FIG. 5, the method for training the license plate recognition model may include the following.

At block 401, multiple training images are obtained.

In order to realize that the license plate recognition model may recognize all types of license plates, various types of license plates need to be taken as training samples to train the license plate recognition model. For example, existing types of the license plates may include: a new energy license plate, a mixed oil and new energy license plate, a double-row yellow license plate, an ordinary blue license plate, a Hong Kong license plate, a Macao license plate, a police car license plate, a single-row armed police license plate, a double-row armed police license plate, an agricultural vehicle license plate, a civil aviation license plate and the like.

However, there are too few types of sets of license plate data, regions are too concentrated, and a collection cost of rare types of license plates is also very high. In view of the fact that all types of license plate images may not be obtained, license plate images covered by all types and all regions may be generated as training images by means of data synthesis in the disclosure. In other words, the training image in the disclosure includes not only real license plate images, but also synthesized license plate images.

In order to enable the synthesized license plate image more realistic, the synthesized license plate may be replaced to the real license plate region based on an existing real license plate image. As a possible implementation, a set of license plates and vehicle appearance pictures are obtained, a license plate picture corresponding to each license plate in the set of license plates is generated based on multiple license plates in the set of license plates, and the license plate picture corresponding to each license plate in the set of license plates is synthesized with the corresponding vehicle appearance picture to obtain a training image corresponding to the corresponding license plate.

At block 402, the license plate recognition model is trained by employing the multiple training images.

The license plate recognition model includes a feature extraction network and a recognition network.

The feature extraction network is configured to obtain a feature map of a license plate region. The feature map contains multiple feature vectors.

As a possible situation, after each training image is inputted into the license plate recognition model, the feature extraction may be performed on each training image by the feature extraction network to obtain the feature map of the license plate region.

The recognition network is configured to: sequentially input the multiple feature vectors based on a first order into a first recurrent neural network for encoding to obtain first codes of the multiple feature vectors; sequentially input the multiple feature vectors based on a second order into a second recurrent neural network for encoding to obtain second codes of the multiple feature vectors; generate multiple target codes of the multiple feature vectors based on the first codes of the multiple feature vectors and the second codes of the multiple feature vectors; and decode the multiple target codes to obtain multiple characters in the license plate.

For convenience of distinction, in the disclosure, the recurrent neural network for encoding the multiple feature vectors in sequence based on the first order is named as the first recurrent neural network, and the recurrent neural network for encoding the multiple feature vectors in sequence based on the second order is named as the second recurrent neural network. Of course, the two recurrent neural networks also be named in other ways, which is only used as an exemplary expression in the disclosure.

Similarly, for convenience of distinction, in the disclosure, the encoded feature vector obtained by inputting each feature vector into the first recurrent neural network for encoding is named as the first code. The encoded feature vector obtained by inputting each feature vector into the second recurrent neural network for encoding is named as the second code. Of course, the code may also be named in other ways, which is only used as an exemplary expression in the disclosure.

In the disclosure, after the multiple feature vectors contained in the feature map of the license plate region are obtained, the multiple feature vectors may be sequentially inputted into the first recurrent neural network for encoding based on the first order, to obtain the first code of each feature vector based on an encoding result of the first recurrent neural network. Furthermore, multiple feature vectors may be sequentially inputted into the second recurrent neural network for encoding based on the second order, to obtain the second code of each feature vector.

It should be noted that, the first order may be a forward order from left to right or a reverse order from right to left. In other words, the multiple feature vectors may be inputted into the first recurrent neural network from left to right for coding, or may be inputted into the first recurrent neural network from right to left for coding, which is not limited in the disclosure.

Similarly, the second order may be a forward sequence from left to right or a reverse sequence from right to left, which is not limited in the disclosure. In the disclosure, the first order needs to be opposite to the second order. For example, when the first order is the forward order from left to right, the second order is the reverse order from right to left. In other words, when the first recurrent neural network encodes the multiple feature vectors forward, the second recurrent neural network encodes the multiple feature vectors backward.

In order to ensure recognition performance of the license plate recognition model for the single-row license plate and the double-row license plate, a ratio of single/double-row license plates and real/synthetic license plates needs to be reasonable in each iteration in the training process. For example, a sample ratio of single-row real license plates, single-row synthetic license plates, double-row real license plates and double-row synthetic license plates may be 0.3: 0.2: 0.2: 0.3.

With the method for training the license plate recognition model according to embodiments of the disclosure, the multiple training images are obtained, and the license plate recognition model is trained by employing the multiple training images. In this way, the license plate recognition model trained by the multiple training images may accurately recognize various types of license plates, which facilitates to improve the practicability of the method for recognizing the license plate.

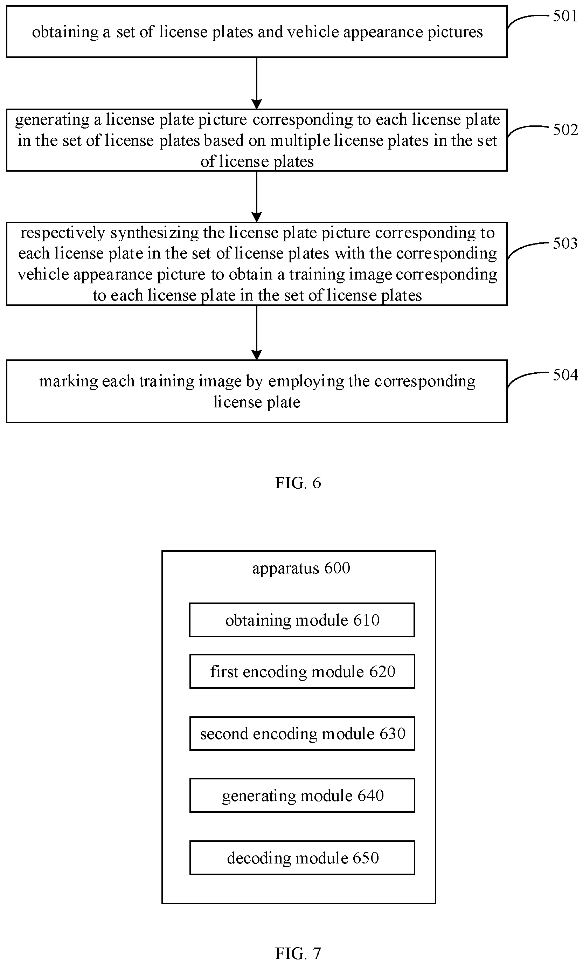

As a possible implementation of embodiments of the disclosure, when the synthesized license plate image is obtained as the training image, each license plate in the set of license plates and the appearance picture of the vehicle may be synthesized to obtain the training image corresponding to each license plate, such that various types of license plate images may be obtained as the training images. Detailed implementation may refer to FIG. 6. FIG. 6 is a flow chart illustrating a sub-process for obtaining a sample image according to Embodiment five of the disclosure.

As illustrated in FIG. 6, obtaining the multiple training images at block 401 may include the following.

At block 501, a set of license plates and vehicle appearance pictures are obtained.

In order to enable the synthesized license plate image more realistic, the synthesized license plate image may be replaced with a real license plate region based on an existing real license plate image. Therefore, in the disclosure, the set of license plates including all types of license plates and the appearance pictures of the vehicles may be obtained.

The set of license plates includes multiple types of license plate, such as, a new energy license plate, a mixed oil and new energy license plate, a double-row yellow license plate, an ordinary blue license plate, a Hong Kong license plate, a Macao license plate, a police car license plate, a single-row armed police license plate, a double-row armed police license plate, an agricultural vehicle license plate, a civil aviation license plate and the like.

In the disclosure, the vehicle appearance picture includes the license plate region, and may be a vehicle corresponding to a license plate type or other types of vehicles, which is not limited here.

At block 502, a license plate picture corresponding to each license plate in the set of license plates is generated based on multiple license plates in the set of license plates.

As a possible implementation, each license plate in the set of license plates may be merged with a license plate template of the corresponding type of license plates to synthesize the license plate picture corresponding to each license plate.

Further, an average value of three color channels R, G and B in the real license plate image is counted. A brightness of the synthesized license plate image is adjusted based on a ratio of a maximum value of the average value to 255. A Gaussian blur is added to reduce image noise and detail level of the synthesized license plate image.

At block 503, the license plate picture corresponding to each license plate in the set of license plates is respectively synthesized with the corresponding vehicle appearance picture to obtain a training image corresponding to each license plate in the set of license plates.

In embodiments of the disclosure, after the license plate picture corresponding to each license plate is obtained, the license plate picture corresponding to each license plate is filled into a real license plate region in a vehicle picture. The training image corresponding to each license plate is obtained by synthesizing the license plate picture with the vehicle picture.

As a possible implementation, the license plate picture corresponding to each license plate may be synthesized with the vehicle picture by affine transformation to obtain the training image corresponding to each license plate.

At block 504, each training image is marked by employing the corresponding license plate.

It may be understood that each license plate is unique. The corresponding license plate may be employed to mark the training image after the training image corresponding to each license plate is obtained.

In embodiments of the disclosure, the set of license plates and the vehicle appearance pictures are obtained. The license plate picture corresponding to each license plate is generated based on the multiple license plates in the set of license plates. The license plate picture corresponding to each license plate is respectively synthesized with the corresponding vehicle appearance picture to obtain the training image corresponding to each license plate. Each training image is marked by employing the corresponding license plate. In this way, the training image corresponding to each license plate may be obtained by synthesizing each license plate in the set of license plates and the appearance picture of the vehicle, such that various types of license plate images may be obtained as the training images.

To achieve the above embodiments, the disclosure provides an apparatus for recognizing a license plate.

FIG. 7 is a block diagram illustrating an apparatus for recognizing a license plate according to Embodiment six of the disclosure.

As illustrated in FIG. 7, the apparatus 600 for recognizing a license plate may include: an obtaining module 610, a first encoding module 620, a second encoding module 630, a generating module 640, and a decoding module 650. The obtaining module 610 is configured to obtain a feature map of a license plate region. The feature map includes multiple feature vectors. The first encoding module 620 is configured to sequentially input the multiple feature vectors based on a first order into a first recurrent neural network for encoding to obtain first codes of the multiple feature vectors. The second encoding module 630 is configured to sequentially input the multiple feature vectors based on a second order into a second recurrent neural network for encoding to obtain second codes of the multiple feature vectors. The generating module 640 is configured to generate multiple target codes of the multiple feature vectors based on the first codes of the multiple feature vectors and the second codes of the multiple feature vectors. The decoding module 650 is configured to decode the multiple target codes to obtain multiple characters in the license plate.

As a possible condition, the generating module 640 may include: a splicing unit, configured to splice the first code and the second code of each feature vector to obtain the target code of the corresponding feature vector.

As another possible condition, the decoding module 650 may include: a decoding unit and a first determining unit. The decoding unit is configured to sequentially decode the multiple target codes by employing a third recurrent neural network to obtain multiple decoded vectors. The first determining unit is configured to determine the multiple characters in the license plate based on the multiple decoded vectors.

As another possible condition, the decoding unit is also configured to: perform multiple rounds of decoding by employing the third recurrent neural network. Each round of decoding includes: obtaining a target code of a current round of decoding; determining a similarity between a system state vector outputted by the third recurrent neural network in a previous round of decoding and the target code of the current round of decoding; weighting the target code of the current round of decoding based on the similarity to obtain a current weighted code; inputting the current weighted code, the system state vector outputted in the previous round of decoding, and a decoded vector outputted in the previous round of decoding into the third recurrent neural network to output a system state vector and a decoded vector of the current round of decoding. A first round of decoding also includes: determining a set start identifier as the decoded vector of the previous round of decoding; and determining a system state vector outputted by a last encoding of the second recurrent neural network as the system state vector outputted in the previous round of decoding.

As another possible condition, the obtaining module 610 may include: an obtaining unit, an extraction unit, a second determining unit, and a transformation unit. The obtaining unit is configured to obtain an original image. The extraction unit is configured to perform feature extraction on the original image to obtain an original feature map corresponding to the original image. The second determining unit is configured to determine an original feature map corresponding to the license plate region from the original feature map corresponding to the original image. The transformation unit is configured to perform perspective transformation on the original feature map corresponding to the license plate region to obtain a target feature map corresponding to the license plate region.

As another possible condition, the second determining unit is configured to: input the original feature map corresponding to the original image into a full convolution network for object recognition to determine a candidate box of the license plate in the original feature map corresponding to the original image; and take a part of the original feature map corresponding to the original image within the candidate box of the license plate as the original feature map corresponding to the license plate region.

As another possible condition, the extraction unit may also be configured to: recognize a text region in the original image; and perform the feature extraction on the text region in the original image and a set surrounding range of the text region to obtain the original feature map corresponding to the original image.

It should be noted that, the above explanation of embodiments of the method for recognizing the license plate is also applicable to the apparatus for recognizing the license plate of this embodiment, which is not elaborated here.

With the apparatus for recognizing the license plate according to embodiments of the disclosure, the feature map of the license plate region is obtained. The feature map includes the multiple feature vectors. The multiple feature vectors are sequentially based on the first order inputted into the first recurrent neural network for encoding to obtain the first codes of the multiple feature vectors. The multiple feature vectors are sequentially based on the second order inputted into the second recurrent neural network for encoding to obtain the second codes of the multiple feature vectors. The multiple target codes of the multiple feature vectors are generated based on the first codes of the multiple feature vectors and the second codes of the multiple feature vectors. The multiple target codes are decoded to obtain the multiple characters in the license plate. With the method, the multiple feature vectors included in the feature map of the extracted license plate region are encoded forward and backward by respectively utilizing the two recurrent neural networks, such that the encoded features may carry context information, and the accuracy of license plate recognition is greater improved.

To achieve the above embodiments, the disclosure provides an apparatus for training a license plate recognition model.

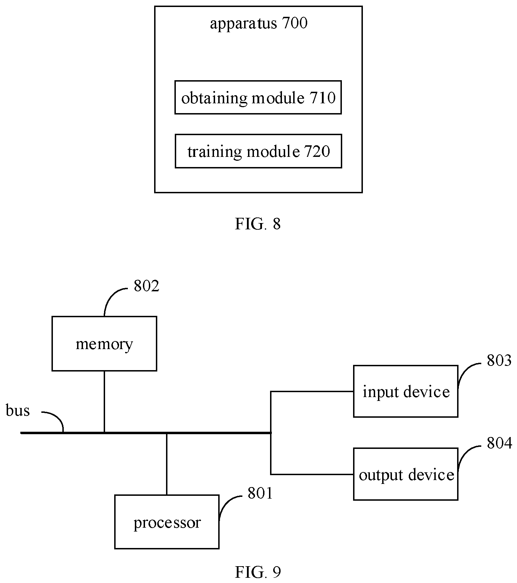

FIG. 8 is a block diagram illustrating an apparatus for training a license plate recognition model according to Embodiment seven of the disclosure.

As illustrated in FIG. 8, the apparatus 700 for training the license plate recognition model may include: an obtaining module 710 and a training module 720.

The obtaining module 710 is configured to obtain multiple training images.

The training module 720 is configured to train the license plate recognition model by employing the multiple training images. The license plate recognition model includes a feature extraction network and a recognition network.

The feature extraction network is configured to obtain a feature map of a license plate region. The feature map includes multiple feature vectors.

The recognition network is configured to: sequentially input the multiple feature vectors based on a first order into a first recurrent neural network for encoding to obtain first codes of the multiple feature vectors; sequentially input the multiple feature vectors based on a second order into a second recurrent neural network for encoding to obtain second codes of the multiple feature vectors; generate multiple target codes of the multiple feature vectors based on the first codes of the multiple feature vectors and the second codes of res the multiple feature vectors; and decode the multiple target codes to obtain multiple characters in the license plate.

As a possible condition, the obtaining module 710 may also include: an obtaining unit, a generating unit, a synthesizing unit, and a marking unit. The obtaining unit is configured to obtain a set of license plates and vehicle appearance pictures. The generating unit is configured to generate a license plate picture corresponding to each license plate in the set of license plates based on multiple license plates in the set of license plates. The synthesizing unit is configured to respectively synthesize the license plate picture corresponding to each license plate in the set of license plates with the corresponding vehicle appearance picture to obtain a training image corresponding to each license plate in the set of license plates. The marking unit is configured to mark each training image by employing the corresponding license plate.

It should be noted that, the above explanation of embodiments of the method for training the license plate recognition model is also applicable to the apparatus for training the license plate recognition model of this embodiment, which is not elaborated here.

With the apparatus for training the license plate recognition model according to embodiments of the disclosure, the multiple training images are obtained, and the license plate recognition model is trained by employing the multiple training images. In this way, various types of license plates may be accurately recognized by utilizing the license plate recognition model trained by the multiple training images, and the practicability of the license plate recognition method is improved.

According to embodiments of the disclosure, the disclosure also provides an electronic device and a readable storage medium.

As illustrated in FIG. 9, FIG. 9 is a block diagram illustrating an electronic device according to embodiments of the disclosure. The electronic device aims to represent various forms of digital computers, such as a laptop computer, a desktop computer, a workstation, a personal digital assistant, a server, a blade server, a mainframe computer and other suitable computer. The electronic device may also represent various forms of mobile devices, such as personal digital processing, a cellular phone, a smart phone, a wearable device and other similar computing device. The components, connections and relationships of the components, and functions of the components illustrated herein are merely examples, and are not intended to limit the implementation of the disclosure described and/or claimed herein.

As illustrated in FIG. 9, the electronic device includes: one or more processors 801, a memory 802, and interfaces for connecting various components, including a high-speed interface and a low-speed interface. Various components are connected to each other via different buses, and may be mounted on a common main board or in other ways as required. The processor may process instructions executed within the electronic device, including instructions stored in or on the memory to display graphical information of the GUI (graphical user interface) on an external input/output device (such as a display device coupled to an interface). In other implementations, multiple processors and/or multiple buses may be used together with multiple memories if desired. Similarly, multiple electronic devices may be connected, and each device provides some necessary operations (for example, as a server array, a group of blade servers, or a multiprocessor system). In FIG. 9, a processor 801 is taken as an example.

The memory 802 is a non-transitory computer readable storage medium provided by the disclosure. The memory is configured to store instructions executable by at least one processor, to enable the at least one processor to execute the method for recognizing the license plate or the method for training the license plate recognition model provided by the disclosure. The non-transitory computer readable storage medium provided by the disclosure is configured to store computer instructions. The computer instructions are configured to enable a computer to execute the method for recognizing the license plate provided by the disclosure.

As the non-transitory computer readable storage medium, the memory 802 may be configured to store non-transitory software programs, non-transitory computer executable programs and modules, such as program instructions/module (such as the obtaining module 610, the first encoding module 620, the second encoding module 630, the generating module 640, and the decoding module 650 illustrated in FIG. 7, or the obtaining module 710 and the training module 720 illustrated in FIG. 8) corresponding to the method for recognizing the license plate or the method for training the license plate recognition model according to embodiments of the disclosure. The processor 801 is configured to execute various functional applications and data processing of the server by operating non-transitory software programs, instructions and modules stored in the memory 802, that is, implements the method for recognizing the license plate or the method for training the license plate recognition model according to the above method embodiments.

The memory 802 may include a storage program region and a storage data region. The storage program region may store an application required by an operating system and at least one function. The storage data region may store data created according to predicted usage of the electronic device based on the semantic representation. In addition, the memory 802 may include a high-speed random access memory, and may also include a non-transitory memory, such as at least one disk memory device, a flash memory device, or other non-transitory solid-state memory device. In some embodiments, the memory 802 may optionally include memories remotely located to the processor 801, and these remote memories may be connected to the electronic device via a network. Examples of the above network include, but are not limited to, an Internet, an intranet, a local area network, a mobile communication network and combinations thereof.

The electronic device may also include: an input device 803 and an output device 804. The processor 801, the memory 802, the input device 803, and the output device 804 may be connected via a bus or in other means. In FIG. 9, the bus is taken as an example.

The input device 803 may receive inputted digital or character information, and generate key signal input related to user setting and function control of the electronic device, such as a touch screen, a keypad, a mouse, a track pad, a touch pad, an indicator stick, one or more mouse buttons, a trackball, a joystick and other input device. The output device 804 may include a display device, an auxiliary lighting device (e.g., LED), a haptic feedback device (e.g., a vibration motor), and the like. The display device may include, but be not limited to, a liquid crystal display (LCD), a light emitting diode (LED) display, and a plasma display. In some embodiments, the display device may be the touch screen.

The various implementations of the system and technologies described herein may be implemented in a digital electronic circuit system, an integrated circuit system, an application specific ASIC (application specific integrated circuit), a computer hardware, a firmware, a software, and/or combinations thereof. These various implementations may include: being implemented in one or more computer programs. The one or more computer programs may be executed and/or interpreted on a programmable system including at least one programmable processor. The programmable processor may be a special purpose or general purpose programmable processor, may receive data and instructions from a storage system, at least one input device, and at least one output device, and may transmit data and the instructions to the storage system, the at least one input device, and the at least one output device.

These computing programs (also called programs, software, software applications, or codes) include machine instructions of programmable processors, and may be implemented by utilizing high-level procedures and/or object-oriented programming languages, and/or assembly/machine languages. As used herein, the terms "machine readable medium" and "computer readable medium" refer to any computer program product, device, and/or apparatus (such as, a magnetic disk, an optical disk, a memory, a programmable logic device (PLD)) for providing machine instructions and/or data to a programmable processor, including a machine readable medium that receives machine instructions as a machine readable signal. The term "machine readable signal" refers to any signal for providing the machine instructions and/or data to the programmable processor.

To provide interaction with a user, the system and technologies described herein may be implemented on a computer. The computer has a display device (such as, a CRT (cathode ray tube) or a LCD (liquid crystal display) monitor) for displaying information to the user, a keyboard and a pointing device (such as, a mouse or a trackball), through which the user may provide the input to the computer. Other types of devices may also be configured to provide interaction with the user. For example, the feedback provided to the user may be any form of sensory feedback (such as, visual feedback, auditory feedback, or tactile feedback), and the input from the user may be received in any form (including acoustic input, voice input or tactile input).

The system and technologies described herein may be implemented in a computing system including a background component (such as, a data server), a computing system including a middleware component (such as, an application server), or a computing system including a front-end component (such as, a user computer having a graphical user interface or a web browser through which the user may interact with embodiments of the system and technologies described herein), or a computing system including any combination of such background component, the middleware components and the front-end component. Components of the system may be connected to each other via digital data communication in any form or medium (such as, a communication network). Examples of the communication network include a local area network (LAN), a wide area networks (WAN), and the Internet.

The computer system may include a client and a server. The client and the server are generally remote from each other and generally interact via the communication network. A relationship between the client and the server is generated by computer programs operated on a corresponding computer and having a client-server relationship with each other.

With the technical solution according to embodiments of the disclosure, the feature map of the license plate region is obtained. The feature map includes the multiple feature vectors. The multiple feature vectors are sequentially inputted into the first recurrent neural network for encoding based on the first order to obtain the first codes of respective feature vectors. The multiple feature vectors are sequentially inputted into the second recurrent neural network for encoding based on the second order to obtain the second codes of respective feature vectors. The multiple target codes of the multiple feature vectors are generated based on the first codes of respective feature vectors and the second codes of respective feature vectors. The multiple target codes are decoded to obtain the multiple characters in the license plate. With the method, the multiple feature vectors included in the feature map of the extracted license plate region are encoded forward and backward by respectively utilizing the two recurrent neural networks, such that the encoded feature carries context information, and the accuracy of license plate recognition is greater improved.

It should be understood that, steps may be reordered, added or deleted by utilizing flows in the various forms illustrated above. For example, the steps described in the disclosure may be executed in parallel, sequentially or in different orders, so long as desired results of the technical solution disclosed in the disclosure may be achieved, there is no limitation here.

The above detailed implementations do not limit the protection scope of the disclosure. It should be understood by the skilled in the art that various modifications, combinations, subcombinations and substitutions may be made based on design requirements and other factors. Any modification, equivalent substitution and improvement made within the spirit and the principle of the disclosure shall be included in the protection scope of disclosure.

**Claims**

1. A method for recognizing a license plate, comprising:

   obtaining (101; 201) a feature map of a license plate region, the feature map comprising a plurality of feature vectors;
   sequentially inputting (102; 202) the plurality of feature vectors based on a first order into a first recurrent neural network for encoding to obtain a first code of each of the plurality of feature vectors;
   sequentially inputting (103; 203) the plurality of feature vectors based on a second order into a second recurrent neural network for encoding to obtain a second code of each of the plurality of feature vectors;
   generating (104) a plurality of target codes of the plurality of feature vectors based on the first code of each of the plurality of feature vectors and the second code of each of the plurality of feature vectors; and
   decoding (105) the plurality of target codes to obtain a plurality of characters in the license plate.

2. The method of claim 1, wherein generating (104) the plurality of target codes of the plurality of feature vectors based on the first code of each of the plurality of feature vectors and the second code of each of the plurality of feature vectors comprises:
   splicing (204) the first code and the second code of each of the plurality of feature vectors to obtain the plurality of target codes.

3. The method of claim 1 or 2, wherein decoding (105) the plurality of target codes to obtain the plurality of characters in the license plate comprises:

   sequentially decoding (205) the plurality of target codes by employing a third recurrent neural network to obtain a plurality of decoded vectors; and
   determining (206) the plurality of characters in the license plate based on the plurality of decoded vectors.

4. The method of claim 3, wherein sequentially (205) decoding the plurality of target codes by employing the third recurrent neural network comprises:

   performing a plurality of rounds of decoding by employing the third recurrent neural network;
   each of the plurality of rounds of decoding comprises:

   obtaining (2051) a target code of a current round of decoding;
   determining (2052) a similarity between a system state vector outputted by the third recurrent neural network in a previous round of decoding and the target code of the current round of decoding;
   weighting (2053) the target code of the current round of decoding based on the similarity to obtain a current weighted code; and

inputting (2054) the current weighted code, the system state vector outputted in the previous round of decoding, and a decoded vector outputted in the previous round of decoding into the third recurrent neural network to output a system state vector and a decoded vector of the current round of decoding; and

a first round of decoding further comprises:

determining a set start identifier as the decoded vector of the previous round of decoding; and
determining a system state vector outputted by a last encoding of the second recurrent neural network as the system state vector outputted in the previous round of decoding.

5. The method of any of claims 1-4, wherein obtaining (101; 201) the feature map of the license plate region comprises:

obtaining (301) an original image;
performing (302) feature extraction on the original image to obtain an original feature map corresponding to the original image;
determining (303) an original feature map corresponding to the license plate region from the original feature map corresponding to the original image; and
performing (304) perspective transformation on the original feature map corresponding to the license plate region to obtain a target feature map corresponding to the license plate region.

6. The method of claim 5, wherein determining (303) the original feature map corresponding to the license plate region from the original feature map corresponding to the original image comprises:

inputting the original feature map corresponding to the original image into a full convolution network for object recognition to determine a candidate box of the license plate in the original feature map corresponding to the original image; and
taking a part of the original feature map corresponding to the original image within the candidate box of the license plate as the original feature map corresponding to the license plate region.

7. The method of claim 5 or 6, wherein performing (302) the feature extraction on the original image to obtain the original feature map corresponding to the original image comprises:

recognizing a text region in the original image; and
performing the feature extraction on the text region in the original image and a set surrounding range of the text region to obtain the original feature map corresponding to the original image.

8. The method of any one of claims 1 to 7, further comprising:

training a license plate recognition model, comprising:

obtaining (401) a plurality of training images; and
training (402) the license plate recognition model by employing the plurality of training images, the license plate recognition model comprising a feature extraction network and a recognition network;

wherein the feature extraction network is configured to obtain a feature map of a license plate region, the feature map comprising a plurality of feature vectors; and
the recognition network is configured to:

sequentially input the plurality of feature vectors based on a first order into a first recurrent neural network for encoding to obtain a first code of each of the plurality of feature vectors;
sequentially input the plurality of feature vectors based on a second order into a second recurrent neural network for encoding to obtain a second code of each of the plurality of feature vectors;
generate a plurality of target codes of the plurality of feature vectors based on the first code of each of the plurality of feature vectors and the second code of each of the plurality of feature vectors; and
decode the plurality of target codes to obtain a plurality of characters in the license plate.

9. The method of claim 8, wherein obtaining the plurality of training images comprises:

obtaining (501) a set of license plates and vehicle appearance pictures;

generating (502) a license plate picture corresponding to each license plate in the set of license plates based on a plurality of license plates in the set of license plates;

respectively synthesizing (503) the license plate picture corresponding to each license plate in the set of license plates with the corresponding vehicle appearance picture to obtain a training image corresponding to each license plate in the set of license plates; and

marking (504) each training image by employing the corresponding license plate.

10. An apparatus for recognizing a license plate, comprising:

an obtaining module (610), configured to obtain a feature map of a license plate region, the feature map comprising a plurality of feature vectors;

a first encoding module (620), configured to sequentially input the plurality of feature vectors based on a first order into a first recurrent neural network for encoding to obtain a first code of each of the plurality of feature vectors;

a second encoding module (630), configured to sequentially input the plurality of feature vectors based on a second order into a second recurrent neural network for encoding to obtain a second code of each of the plurality of feature vectors;

a generating module (640), configured to generate a plurality of target codes of the plurality of feature vectors based on the first code of each of the plurality of feature vectors and the second code of each of the plurality of feature vectors; and

a decoding module (650), configured to decode the plurality of target codes to obtain a plurality of characters in the license plate.

11. The apparatus of claim 10, wherein the generating module (640) comprises:

a splicing unit, configured to splice the first code and the second code of each of the plurality of feature vectors to obtain the plurality of target codes.

12. The apparatus of claim 10 or 11, wherein the decoding module (650) comprises:

a decoding unit, configured to sequentially decode the plurality of target codes by employing a third recurrent neural network to obtain a plurality of decoded vectors; and

a first determining unit, configured to determine the plurality of characters in the license plate based on the plurality of decoded vectors.

13. An electronic device, comprising:

at least one processor; and

a memory, communicatively coupled to the at least one processor,

wherein the memory is configured to store instructions executable by the at least one processor, and the at least one processor is caused to execute the method for recognizing the license plate according to any one of claims 1 to 9.

14. A non-transitory computer readable storage medium having computer instructions stored thereon, wherein the computer instructions are configured to cause a computer to execute the method for recognizing the license plate according to any one of claims 1 to 9.

15. A program product having stored therein instructions that, when executed by one or more processors of an apparatus, causes the apparatus to perform the method for recognizing the license plate according to any one of claims 1 to 9.

obtaining a feature map of a license plate region — 101

sequentially inputting the multiple feature vectors based on a first order inputted into a first recurrent neural network for encoding to obtain a first code of each of the multiple feature vectors — 102

sequentially inputting the multiple feature vectors based on a second order into a second recurrent neural network for encoding to obtain a second code of each of the multiple feature vectors — 103

generating multiple target codes of the multiple feature vectors based on the first code of each of the multiple feature vectors and the second code of each of the multiple feature vectors — 104

decoding the multiple target codes to obtain multiple characters in the license plate — 105

FIG. 1

```
┌─────────────────────────────────────────────────────────┐        201
│                                                         │   ╭──
│       obtaining a feature map of a license plate region │  ╱
│                                                         │ ╱
└─────────────────────────────────────────────────────────┘
                            │
                            ▼
┌─────────────────────────────────────────────────────────┐        202
│   sequentially inputting the multiple feature vectors    │   ╭──
│   based on a first order inputted into a first recurrent │  ╱
│   neural network for encoding to obtain a first code of  │ ╱
│          each of the multiple feature vectors            │
└─────────────────────────────────────────────────────────┘
                            │
                            ▼
┌─────────────────────────────────────────────────────────┐        203
│   sequentially inputting the multiple feature vectors    │   ╭──
│  based on a second order into a second recurrent neural  │  ╱
│  network for encoding to obtain a second code of each of │ ╱
│             the multiple feature vectors                 │
└─────────────────────────────────────────────────────────┘
                            │
                            ▼
┌─────────────────────────────────────────────────────────┐        204
│   splicing the first code and the second code of each    │   ╭──
│   feature vector to obtain the target code of the        │  ╱
│            corresponding feature vector                  │ ╱
└─────────────────────────────────────────────────────────┘
                            │
                            ▼
┌─────────────────────────────────────────────────────────┐        205
│  sequentially decoding the multiple target codes by      │   ╭──
│  employing a third recurrent neural network to obtain    │  ╱
│              multiple decoded vectors                    │ ╱
└─────────────────────────────────────────────────────────┘
                            │
                            ▼
┌─────────────────────────────────────────────────────────┐        206
│  determining the multiple characters in the license      │   ╭──
│  plate based on the multiple decoded vectors             │  ╱
│                                                         │ ╱
└─────────────────────────────────────────────────────────┘
```

FIG. 2

```
┌─────────────────────────────────────────────────────────┐
│                                                         │  ╭─ 2051
│      obtaining a target code of a current round of      │ ╱
│                       decoding                          │
└─────────────────────────────────────────────────────────┘
                              │
                              ▼
┌─────────────────────────────────────────────────────────┐
│  determining a similarity between a system state vector │  ╭─ 2052
│  outputted by the third recurrent neural network in a   │ ╱
│  previous round of decoding and the target code of the  │
│            current round of decoding                    │
└─────────────────────────────────────────────────────────┘
                              │
                              ▼
┌─────────────────────────────────────────────────────────┐
│  weighting the target code of the current round of      │  ╭─ 2053
│  decoding based on the similarity to obtain a current   │ ╱
│                   weighted code                         │
└─────────────────────────────────────────────────────────┘
                              │
                              ▼
┌─────────────────────────────────────────────────────────┐
│  inputting the current weighted code, the system state  │  ╭─ 2054
│  vector outputted in the previous round of decoding,    │ ╱
│  and a decoded vector outputted in the previous round   │
│  of decoding into the third recurrent neural network to │
│  output a system state vector and a decoded vector      │
│           of the current round of decoding              │
└─────────────────────────────────────────────────────────┘
```

FIG. 3

```
┌────────────────────────────────────────────────────────┐ ⌐301
│              obtaining an original image               │
└────────────────────────────────────────────────────────┘
                            │
                            ▼
┌────────────────────────────────────────────────────────┐ ⌐302
│  performing feature extraction on the original image to obtain an │
│   original feature map corresponding to the original image        │
└────────────────────────────────────────────────────────┘
                            │
                            ▼
┌────────────────────────────────────────────────────────┐ ⌐303
│  determining an original feature map corresponding to the license │
│  plate region from the original feature map corresponding to the  │
│                       original image                   │
└────────────────────────────────────────────────────────┘
                            │
                            ▼
┌────────────────────────────────────────────────────────┐ ⌐304
│  performing perspective transformation on the original feature map │
│  corresponding to the license plate region to obtain a target feature │
│       map corresponding to the license plate region    │
└────────────────────────────────────────────────────────┘
```

FIG. 4

```
┌────────────────────────────────────────────────────────┐ ⌐401
│           obtaining a plurality of training images     │
└────────────────────────────────────────────────────────┘
                            │
                            ▼
┌────────────────────────────────────────────────────────┐ ⌐402
│  training the license plate recognition model by employing the │
│               plurality of training images             │
└────────────────────────────────────────────────────────┘
```

FIG. 5

obtaining a set of license plates and vehicle appearance pictures — 501

generating a license plate picture corresponding to each license plate in the set of license plates based on multiple license plates in the set of license plates — 502

respectively synthesizing the license plate picture corresponding to each license plate in the set of license plates with the corresponding vehicle appearance picture to obtain a training image corresponding to each license plate in the set of license plates — 503

marking each training image by employing the corresponding license plate — 504

FIG. 6

apparatus 600

obtaining module 610

first encoding module 620

second encoding module 630

generating module 640

decoding module 650

FIG. 7

apparatus 700

obtaining module 710

training module 720

FIG. 8

802

memory

bus

803

input device

804

output device

801

processor

FIG. 9

Europäisches
Patentamt

European
Patent Office

Office européen
des brevets

## EUROPEAN SEARCH REPORT

Application Number

EP 21 16 9665

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHIVAKUMARA PALAIAHNAKOTE ET AL: "CNN-RNN based method for license plate recognition", CAAI TRANSACTIONS ON INTELLIGENCE TECHNOLOGY, THE INSTITUTION OF ENGINEERING AND TECHNOLOGY, MICHAEL FARADAY HOUSE, SIX HILLS WAY, STEVENAGE, HERTS. SG1 2AY, UK, vol. 3, no. 3, 1 September 2018 (2018-09-01), pages 169-175, XP006070788, DOI: 10.1049/TRIT.2018.1015 * abstract * * page 169 - page 174 * * figures 6,8 * | 1-15 | INV. G06K9/62 |
| A | WANG JIANZONG ET AL: "A deep learning-based method for vehiclelicense plate recognition in natural scene", APSIPA TRANSACTIONS ON SIGNAL AND INFORMATION PROCESSING, vol. 8, 1 January 2019 (2019-01-01), XP055846872, DOI: 10.1017/ATSIP.2019.8 * abstract * * page 1 - page 6 * * figure 4 * | 1-15 | |
| | ----- | | TECHNICAL FIELDS SEARCHED (IPC) |
| | -/-- | | G06K |

The present search report has been drawn up for all claims

| Place of search | Date of completion of the search | Examiner |
|---|---|---|
| The Hague | 2 October 2021 | Karwe, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 21 16 9665

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHANG LINJIANG ET AL: "A Robust Attentional Framework for License Plate Recognition in the Wild", IEEE TRANSACTIONS ON INTELLIGENT TRANSPORTATION SYSTEMS, 9 June 2020 (2020-06-09), pages 1-10, XP055846873, Piscataway, NJ, USA ISSN: 1524-9050, DOI: 10.1109/TITS.2020.3000072 * abstract * * page 1 - page 6 * * figures 2,3,4 * | 1-15 | |
| A | ZHANG YUXIN ET AL: "A Robust Chinese License Plate Detection and Recognition Systemin Natural Scenes", 2019 IEEE 4TH INTERNATIONAL CONFERENCE ON SIGNAL AND IMAGE PROCESSING (ICSIP), IEEE, 19 July 2019 (2019-07-19), pages 137-142, XP033634155, DOI: 10.1109/SIPROCESS.2019.8868545 [retrieved on 2019-10-14] * abstract * * page 137 - page 141 * * figures 3,4 * | 1-15 | |

TECHNICAL FIELDS
SEARCHED    (IPC)

The present search report has been drawn up for all claims

| Place of search | Date of completion of the search | Examiner |
|---|---|---|
| The Hague | 2 October 2021 | Karwe, Markus |

EPO FORM 1503 03.82 (P04C01)